# FASCICULE DE BREVET EUROPEEN

(11) **EP 4 085 577 B1**
(45) Date de publication et mention de la délivrance du brevet: **29.04.2026**
(21) Numéro de dépôt: 20851238.4
(22) Date de dépôt: 30.12.2020
(51) Int. Cl.: H04L 12/28, H02J 50/20

(54) **DISPOSITIF DE COMMANDE ET PROCÉDÉ DE CONFIGURATION ASSOCIÉ**
STEUERVORRICHTUNG UND ZUGEHÖRIGES KONFIGURATIONSVERFAHREN
CONTROL DEVICE AND ASSOCIATED CONFIGURATION METHOD

(30) Priorité: 31.12.2019 FR 1915794
(43) Date de publication de la demande: 09.11.2022
(73) Titulaire: Somfy Activites SA, 74300 Cluses (FR)
(72) Inventeur: ROBIN, Serge, 74300 CLUSES (FR); DESBIOLLES, Arnaud, 74300 CLUSES (FR)
(74) Mandataire: Germain Maureau
(86) Numéro de dépôt international: PCT/FR2020/052639
(87) Numéro de publication internationale: WO 2021/136917

(56) Documents cités:
- EP-A1- 3 300 308
- WO-A1-2019/004824
- FR-A1- 3 058 808
- US-A1- 2010 253 156

## Description

### Domaine technique de l'invention

La présente invention se rapporte au domaine des installations domotiques. Plus particulièrement, la présente invention se rapporte à un dispositif de commande ainsi qu'à l'appairage dudit dispositif de commande dans une installation domotique.

### Etat de la technique

De manière connue, le document FR1658952A décrit un procédé d'appairage d'un appareil domotique dans une installation domotique. Le procédé d'appairage décrit comprend notamment une étape d'initiation de la procédure d'appairage dans laquelle l'appareil domotique émet des ondes radiofréquences à une intensité maximale. Un échange est alors initié entre l'appareil domotique et la centrale de commande.

Toutefois, cette solution présente des limites.

En effet, certaines appareils domotiques comprennent une source d'énergie limitée du fait de leurs utilisations nominales peu couteuses en énergie. L'appairage de ces appareils tel que décrit dans le document FR1658952A risque de vider la source d'énergie des appareils, les empêchant par la même de fonctionner normalement.

La présente invention a pour but de résoudre tout ou partie des inconvénients mentionnés ci-dessus.

### Objet de l'invention

La présente invention est définie dans les revendications indépendantes. D'autres possibilités et modes de réalisation sont présentés dans les revendications dépendantes.

La disposition de la revendication 1 permet au dispositif d'utiliser l'énergie du signal incident afin d'envoyer le signal de configuration. Une telle disposition permet au dispositif d'envoyer des signaux de configuration sans avoir recours à une source d'énergie interne telle qu'une batterie ou une pile par exemple.

Cette disposition est adaptée pour un dispositif de commande muni d'un système de génération d'énergie pour l'envoi de signaux de commande. Le système de génération d'énergie permet de fournir une quantité d'énergie comprise dans une première gamme de quantité d'énergie. Le convertisseur est agencé pour générer une quantité d'énergie comprise dans une deuxième gamme de quantité d'énergie supérieure à la première gamme de quantité d'énergie, à partir du signal incident. A titre d'exemple, ce mode de réalisation correspond à un bouton de commande sans fil et sans pile muni d'un système de génération d'énergie.

Notamment, la première gamme de quantité d'énergie est suffisante pour l'envoi d'au moins une trame de commande, en particulier pour l'envoi d'une trame de commande à un dispositif domotique récepteur. Toutefois, la réalisation d'envoi de signaux de configuration requiert une quantité d'énergie dans une seconde gamme de quantité d'énergie, les valeurs de cette seconde gamme étant supérieures aux valeurs de la première gamme. Le convertisseur permet de fournir une énergie dans la deuxième gamme de quantité d'énergie.

De manière générale, le convertisseur est configuré pour convertir un signal radiofréquence en courant électrique.

Selon une possibilité, l'émetteur/récepteur sans fil est une antenne radiofréquence. Une telle disposition permet d'émettre et de recevoir des signaux sans fil et sans ligne de vue directe.

Un signal de commande est de toute sorte tel qu'un signal de synchronisation, un signal de configuration, ou un signal de pairage par exemple.

Selon une possibilité, le signal incident est un signal non porteur de données utiles.

Selon une possibilité, le courant électrique est un courant électrique continu. Une telle disposition permet au courant d'être utilisé directement par l'unité de traitement logique et l'émetteur / récepteur sans nécessiter de conversion. Une telle disposition permet de limiter l'encombrement du dispositif de commande.

Selon une possibilité, le dispositif d'émission et le dispositif de réception sont deux dispositifs distincts l'un de l'autre. Une telle configuration permet d'utiliser l'énergie du dispositif d'émission afin d'envoyer un message au dispositif de réception.

Selon une possibilité, le dispositif de réception peut être de toute sorte tel que l'unité centrale d'une installation domotique par exemple.

Selon un mode de réalisation, le dispositif comprend une unité de lissage d'énergie configurée pour lisser le courant issu de la conversion du signal incident. Le lissage consiste à stocker une très faible quantité d'énergie, de l'ordre de quelques centaines de µs à 1ms, pour une intensité allant jusqu'à 20mA et une énergie de 1µJoules, afin d'éviter les variations rapides de la tension d'appel de l'unité logique de traitement.

Une telle disposition permet à la fois on configuration simple, un faible entretien et impact environnemental du fait de l'absence d'une grande capacité de stockage telle qu'une pile par exemple, une utilisation ponctuelle du dispositif de commande sans nécessiter de grande capacité de stockage telle qu'une pile ou une batterie.

Selon un mode de réalisation, l'unité de lissage d'énergie est un condensateur.

Selon un mode de réalisation, l'énergie issue du signal incident est stockée dans le condensateur. Une telle disposition permet à un dispositif de commande comprenant une source d'énergie externe telle qu'une alimentation solaire d'être mis en fonctionnement même lorsque ladite alimentation externe n'alimente plus le dispositif de commande.

Une telle disposition permet au dispositif d'émettre des signaux de commande sans nécessiter de pile, ni de batterie. Une telle disposition permet au dispositif d'être plus compact tout en réduisant son empreinte écologique. De plus, les piles ont une durée de vie limitée, une telle disposition permet donc d'améliorer grandement la durée de vie du dispositif de commande.

Selon un mode de réalisation, le message de configuration est un message d'appairage.

Une telle disposition permet d'utiliser l'énergie du signal incident pour réaliser l'appairage du dispositif dans l'installation domotique. En effet, en utilisation nominale, le dispositif de commande ne consomme qu'une faible quantité d'énergie alors que lors de son appairage, celui-ci a besoin de multiplier les échanges avec un ou plusieurs autres appareils, ce qui nécessite une bien plus grande quantité d'énergie.

Selon un mode de réalisation, le dispositif d'émission depuis lequel est émis le signal incident est un ordiphone.

Une telle disposition permet d'utiliser l'énergie de l'ordiphone lors de la configuration du dispositif de commande. En effet, l'énergie stockée dans le condensateur suffit à assurer le fonctionnement nominal du dispositif. Cela permet donc de réduire à la fois la taille du dispositif et son empreinte écologique.

Le signal incident peut être de tous types tel qu'utilisant le protocole 3G, 4G, GSM, GPSR, WIFI ou Bluetooth. Une telle disposition permet d'envoyer un message de commande ou de configuration à l'aide de dispositifs très couramment présent dans le commerce.

Selon un mode de réalisation, le signal incident en provenance d'un dispositif d'émission et le signal de configuration envoyé au dispositif de réception sont de fréquences différentes.

On entend par fréquences différentes, deux fréquences entre lesquelles il existe une différence de plus de 0,1% ou de quelques MHz. A titre d'exemple, le signal incident peut être un signal à une fréquence de l'ordre de 2,4Ghz et le signal de configuration peut être envoyé à une fréquence de l'ordre de 868 MHz correspondant à celle d'un protocole domotique.

Une telle disposition permet à l'émetteur/récepteur d'envoyer le signal de configuration tout en recevant le signal incident. Une telle disposition permet donc d'utiliser le courant électrique issue de la conversion du signal incident pour envoyer le signal de configuration.

Selon un mode de réalisation, le signal incident en provenance d'un dispositif d'émission et le signal de configuration envoyé au dispositif de réception sont de mêmes fréquences. On entend par mêmes fréquences le fait que la fréquence du signal incident et la fréquence du signal de configuration présentent une différence de moins de 0,1% ou de quelques MHz. En particulier, dans ce cas, le dispositif de commande peut être configuré pour passer d'un premier mode de fonctionnement de réception du signal incident en provenance du dispositif d'émission destiné à un stockage d'énergie, à un deuxième mode de fonctionnement d'émission dans lequel le signal de configuration est émis à destination du dispositif de réception.

En particulier, le passage du premier mode au deuxième mode de fonctionnement est réalisé lorsque le dispositif dispose de suffisamment d'énergie disponible dans l'unité de lissage d'énergie pour procéder à l'émission d'au moins un message de configuration, et en particulier pour procéder à un échange de messages correspondant à une configuration complète d'un dispositif de réception. Dans ce cas, l'unité de lissage correspond à une unité de stockage d'énergie.

Selon un mode de réalisation, le dispositif de commande est configuré pour recevoir et convertir le signal incident lorsque l'unité logique de traitement est hors tension.

Selon un mode de réalisation, le convertisseur est configuré pour générer un signal binaire à destination de l'unité logique de traitement.

Selon un mode de réalisation, la valeur du signal binaire généré dépend de l'état de réception du signal incident.

Selon une possibilité, l'émetteur/récepteur est électriquement connecté à une première diode, ladite première diode étant configurée pour être passante dans le sens de la réception de signal. L'émetteur/récepteur est également électriquement connecté à une deuxième diode, ladite deuxième diode étant configurée pour être passante dans le sens de l'émission de signal. La première diode est électriquement connectée au convertisseur alors que la deuxième diode est électriquement connectée à l'unité logique de traitement. Une telle disposition permet au signal incident d'être automatiquement dirigé vers le convertisseur, et cela même lorsque l'unité logique de traitement est hors tension. Une telle disposition permet d'obtenir un courant électrique pour alimenter l'unité logique de traitement et pour envoyer un signal de commande et/ou de configuration même sans alimentation électrique interne au dispositif de commande.

L'invention concerne également un procédé de configuration d'un dispositif de commande défini dans la revendication 11
Une telle disposition permet au dispositif d'envoyer des messages de configuration lors de la réception du signal incident combinée à l'actionnement de l'unité d'actionnement. Une telle disposition permet de mettre le dispositif de commande dans un mode de configuration uniquement à la demande de l'utilisateur. Une telle disposition prévient les cas de figure dans lesquels le dispositif de commande reçoit un signal incident qui ne lui est pas destiné.

Selon une possibilité, le courant électrique est un courant électrique continu. Une telle disposition permet au courant d'être utilisé directement par l'unité de traitement logique et l'émetteur/récepteur sans nécessiter de conversion. Un telle disposition permet de limiter l'encombrement du dispositif de commande.

Une telle possibilité permet d'utiliser l'énergie du signal incident pour réaliser la configuration du dispositif dans l'installation domotique. En effet, en utilisation nominale, le dispositif de commande ne consomme qu'une faible quantité d'énergie alors que lors de sa configuration, celui-ci a besoin de multiplier les échanges avec unité centrale de l'installation domotique, ce qui nécessite une bien plus grande quantité d'énergie. Cette quantité d'énergie plus importante utilisée est celle du signal incident.

Selon une possibilité, le dispositif d'émission et le dispositif de réception sont deux dispositifs distincts l'un de l'autre. Une telle configuration permet d'utiliser l'énergie du dispositif d'émission afin d'envoyer un message au dispositif de réception.

Selon une possibilité, le dispositif de réception peut être de toute sorte tel que l'unité centrale d'une installation domotique par exemple.

Selon un mode de réalisation, l'instruction de configuration reçue à l'étape de réception d'une instruction de configuration comprend une ou plusieurs des informations suivantes :
- un motif de synchronisation permettant de synchroniser le dispositif de commande avec le dispositif d'émission;
- un en-tête comprenant un identifiant de version protocolaire permettant au dispositif d'émission de désigner au dispositif de commande le protocole de transmission utilisé ;
- des données telle qu'une adresse réseau correspondant au dispositif de réception par exemple ; et/ou
- une somme de contrôle permettant de contrôler la bonne transmission des données.

Selon un mode de réalisation, l'instruction de configuration est en provenance du dispositif d'émission.

### Description sommaire des dessins

L'invention sera encore mieux comprise à l'aide de la description détaillée qui est exposée ci-dessous en regard des dessins annexés dans lesquels :
[Fig. 1] représente un dispositif de commande selon l'invention au sein d'une installation domotique.
[Fig. 2] représente un schéma électrique d'un dispositif de commande selon un premier mode de réalisation conformément à la présente invention.
[Fig. 3] représente un schéma électrique d'un dispositif de commande selon un second mode de réalisation conformément à la présente invention.
[Fig. 4] est un ordinogramme représentant un mode d'exécution d'un procédé de configuration d'un appareil de commande selon un premier mode de mise en œuvre l'invention.
[Fig. 5] est un ordinogramme représentant un mode d'exécution d'un procédé de configuration d'un appareil de commande selon un second mode de mise en œuvre de l'invention.

### Description détaillée

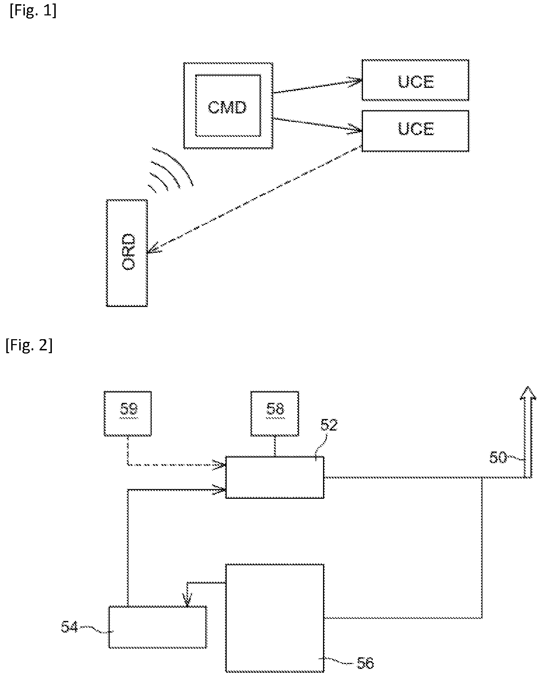

La figure 1 représente, un dispositif de commande CMD destiné à émettre un signal de commande à destination d'un dispositif de réception UCE dans une installation domotique. A titre d'exemple, le dispositif de commande CMD peut être un point de commande domotique, par exemple un bouton de commande, et en particulier un bouton de commande ou point de commande sans pile et sans fil.

Comme représenté sur la figure 2, selon un premier mode de réalisation, le dispositif de commande CMD comprend un émetteur/récepteur sans fil 50. L'émetteur/récepteur sans fil peut être un émetteur récepteur utilisé par le dispositif de commande pour envoyer des signaux de commande. L'émetteur/récepteur est configuré pour recevoir un signal incident en provenance d'un dispositif d'émission ORD tel que représenté à la figure 1. Le dispositif d'émission ORD est préférablement un ordiphone. Au sens de la présente invention, le dispositif de réception UCE est une unité centrale de l'installation domotique.

Le dispositif de commande CMD comprend également une unité d'actionnement 58 configurée pour recevoir une instruction de configuration en provenance d'un utilisateur USR. A titre d'exemple l'unité d'actionnement peut comprendre un écran tactile, ou encore un clavier comprenant plusieurs touches, l'actionnement correspondant par exemple à une combinaison de touches. L'unité d'actionnement peut également comprendre un bouton d'appairage.

Le dispositif de commande comprend également une unité logique de traitement 52 adaptée pour décider de l'émission du signal de commande par l'émetteur/récepteur sans fil 50 comprenant une seule antenne, et configurée pour recevoir une instruction de configuration en provenance de l'unité d'actionnement et générer au moins un message de configuration à émettre à destination du dispositif de réception UCE, l'émetteur/récepteur sans fil 50 étant également configuré pour émettre l'au moins un message de configuration à destination du dispositif de réception UCE. L'émetteur/récepteur sans fil 50 est une antenne radiofréquence. Une telle disposition permet d'émettre et de recevoir des signaux sans fil et sans ligne de vue directe.

Le dispositif de commande CMD comprend également un convertisseur 56 configuré pour convertir le signal incident en courant électrique et pour alimenter l'unité logique de traitement 52 à l'aide dudit courant électrique. En effet, le convertisseur 56 est configuré pour convertir un signal radiofréquence en courant électrique continu. Une telle disposition permet au dispositif de commande CMD d'utiliser l'énergie du signal incident afin d'envoyer le signal de configuration. Une telle disposition permet au dispositif de commande CMD d'envoyer des signaux de configuration sans avoir recours à une source d'énergie interne telle qu'une batterie ou une pile par exemple.

Selon un mode de réalisation, le convertisseur 56 est également configuré pour générer un signal binaire à destination de l'unité logique de traitement 52. Le signal binaire généré dépend de l'état de réception du signal incident.

Selon un mode de réalisation, lorsque qu'un signal incident est reçu par l'émetteur/récepteur sans fil 50 et que le convertisseur 56 converti ledit signal incident en courant électrique, le convertisseur 56 génère un signal binaire à destination de l'unité logique de traitement 52 égale à un. A l'inverse, lorsque le convertisseur 56 ne converti aucun signal incident, ledit convertisseur génère un signal binaire égale à zéro.

Selon un mode de réalisation, le signal binaire généré à destination de l'unité logique de traitement 52 est lu par ladite unité logique de traitement suivant un intervalle déterminé tel que toutes les 20ms par exemple. Une telle disposition permet d'envoyer un message de configuration comprenant une ou plusieurs informations à travers un ou plusieurs messages incidents.

Ainsi, une trame est constituée à partir d'une succession de signaux binaires qui peut contenir un signal de réveil (WAKE-UP), un motif de synchronisation, un entête (HEADER), des données (DATA) et un code de vérification (CRC-4).

Préférentiellement, le signal de réveil comprend quatre signaux égaux à 1, de façon à fournir suffisamment d'énergie pour traiter les signaux à venir.

Le convertisseur 56 est adapté pour convertir un signal incident qui peut être de tous type tel qu'utilisant le protocole 3G, 4G, GSM, GPSR, WIFI ou Bluetooth. Une telle disposition permet d'envoyer un signal de commande ou de configuration à l'aide de dispositifs très couramment présents dans le commerce.

Selon un mode de réalisation, le courant électrique est un courant électrique continu. Une telle disposition permet au courant d'être utilisé par l'unité de traitement logique 52 et l'émetteur / récepteur 50 sans nécessiter de nouvelle conversion. Une telle disposition permet de limiter l'encombrement du dispositif de commande CMD.

Le dispositif de commande CDM comprend également une unité de lissage d'énergie 54, configurée pour lisser le courant issu de la conversion du signal incident. L'unité de lissage d'énergie peut être de toute sorte tel qu'un condensateur ou une capacité.

Le dispositif de commande CDM peut comprendre ou être associé à également un système de génération d'une énergie électrique 59, en particulier dans l'exemple mentionné précédent de point de commande sans pile et sans fil.

Le système de génération d'une énergie électrique 59 est configuré pour alimenter des composants du dispositif, et en particulier l'unité de traitement logique de manière à permettre l'envoi d'un signal de commande. Par exemple, il peut s'agir d'un générateur électrodynamique ou un générateur piézo-électrique. Le système de génération d'énergie en utilisation nominale est capable de fournir qu'une quantité d'énergie limitée mais suffisante pour envoyer une trame d'ordre à un dispositif domotique récepteur. Le générateur peut être alimenté par exemple par l'énergie mécanique correspondant à la pression d'un bouton de commande. La quantité d'énergie générée pour l'envoi du signal de commande est comprise dans une première gamme de valeurs qui est inférieure à une deuxième gamme de valeurs correspondant à un procédé de configuration, fournie par le convertisseur 56.

Au sens de la présente invention, un signal incident est un message non porteur de données utiles. C'est-à-dire que le signal a pour unique but d'être converti et ne transmet donc pas de données utiles au dispositif de commande CMD. Ainsi, tout message émis dans n'importe quel protocole pourra être utilisé car seule sa conversion en énergie comte.

Le dispositif de commande CMD est adapté pour envoyer un signal de commande. Un signal de commande est de toute sorte tel qu'un signal d'ouverture de porte ou de déploiement de protection solaire par exemple.

Selon un mode de réalisation, le dispositif d'émission ORD et le dispositif de réception UCE sont deux dispositifs distincts l'un de l'autre. Une telle configuration permet d'utiliser l'énergie du dispositif d'émission ORD afin d'envoyer un message au dispositif de réception UCE. Selon un mode de réalisation, le dispositif de réception UCE peut être de toute sorte tel que l'unité centrale d'une installation domotique par exemple.

Selon le premier mode de réalisation présenté à la figure 2, le signal incident en provenance d'un dispositif d'émission ORD et le signal de configuration envoyé à un dispositif de réception UCE sont de fréquences différentes. Une telle disposition permet à l'émetteur/récepteur sans fil 50 d'envoyer le signal de configuration tout en recevant le signal incident. Une telle disposition permet donc d'utiliser directement le courant électrique issue de la conversion du signal incident pour envoyer le signal de configuration, tout en utilisant simultanément la même antenne.

Dans ce mode de réalisation, le dispositif de commande CMD est configuré pour recevoir et convertir le signal incident lorsque l'unité logique de traitement 52 est hors tension. Une telle disposition permet au signal incident d'être automatiquement dirigé vers le convertisseur, et cela même lorsque l'unité logique de traitement est hors tension. Une telle disposition permet d'obtenir un courant électrique pour alimenter l'unité logique de traitement et pour envoyer un signal de commande et /ou de configuration même sans alimentation électrique interne au dispositif de commande.

Une telle disposition permet au dispositif de commande CMD d'utiliser l'énergie du signal incident afin d'envoyer un signal de configuration ou de commande. Une telle disposition permet au dispositif de commande CMD d'envoyer des signaux de configuration ou de commande sans avoir recours à une source d'énergie interne telle qu'une batterie ou une pile par exemple. Une telle disposition permet également d'obtenir un dispositif de commande CMD ayant une architecture simple et peu encombrante.

L'utilisation du premier mode de réalisation correspond à un cas de figure dans lequel le signal incident en provenance d'un dispositif d'émission ORD et le signal de configuration envoyé à un dispositif de réception UCE sont de fréquences différentes. Toutefois, plus les fréquences du signal incident en provenance d'un dispositif d'émission ORD et le signal de configuration envoyé au dispositif de réception UCE seront proches, et donc plus de gain de l'antenne sera important et plus l'énergie électrique issue de la conversion du signal incident sera importante.

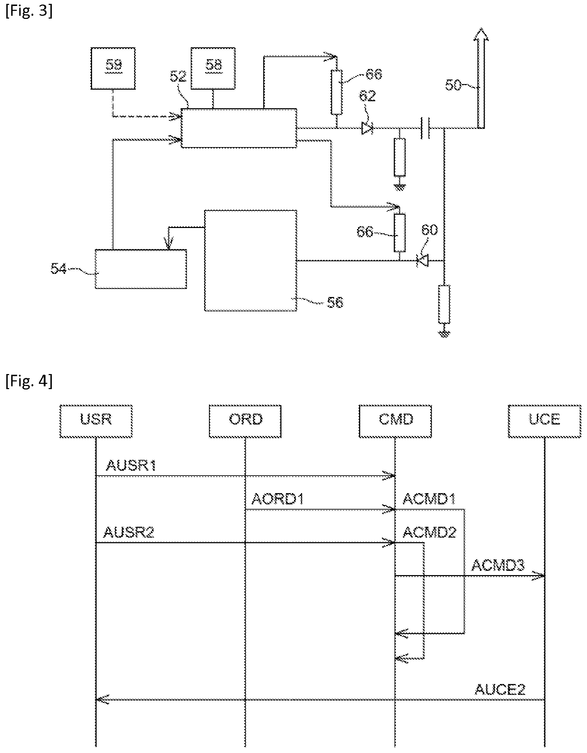

Selon un deuxième mode de réalisation présenté à la figure 3, l'émetteur/récepteur est mono bande, et/ou le signal incident et le message de configuration sont sur la même fréquence. Dans ce cas, il n'est pas possible d'émettre et de recevoir en même temps sur la même fréquence à l'aide d'un seul émetteur/récepteur sans fil 50. Selon ce deuxième mode de réalisation, le dispositif de commande CDM comprend également un émetteur/récepteur sans fil 50, un convertisseur 56, une unité logique de traitement 52, une unité d'actionnement 58, une unité de lissage d'énergie 54.

L'émetteur/récepteur sans fil 50 est électriquement connecté à une première diode 60, ladite première diode 60 étant configurée pour être passante dans le sens de la réception du signal incident. L'émetteur/récepteur sans fil 50 est également électriquement connecté à une deuxième diode 62, ladite deuxième diode étant configurée pour être passante dans le sens de l'émission de signal. La première diode 60 est électriquement connectée au convertisseur 56 alors que la deuxième diode 60 est électriquement connectée à l'unité logique de traitement 52.

En d'autres termes, l'émetteur/récepteur sans fil 50 est passivement connecté au convertisseur 56.

Ces dispositions permettent d'obtenir un dispositif de commande configuré pour recevoir et convertir le signal incident lorsque l'unité logique de traitement est hors tension dans le cas du second mode de réalisation selon lequel le message de configuration et le signal incident sont sur la même fréquences.

Par ailleurs, les diodes 60 et 62 sont commandées par l'unité logique de traitement 52. Ces dispositions permettent à l'unité logique de traitement de faire passer le dispositif d'un mode de réception du signal incident destiné à un stockage d'énergie, à un mode d'émission dans lequel le signal de configuration est émis à destination du dispositif de réception lorsque le dispositif dispose de suffisamment d'énergie disponible dans l'unité de lissage d'énergie 54 qui correspond dans ce cas à une unité de stockage d'énergie.

Le message de configuration est un message d'appairage, une telle disposition permet d'utiliser l'énergie du signal incident pour réaliser l'appairage du dispositif de commande CMD dans l'installation domotique. En effet, en utilisation nominale, le dispositif de commande ne consomme qu'une faible quantité d'énergie alors que lors de son appairage, celui-ci a besoin de multiplier les échanges avec un ou plusieurs autres appareils, ce qui nécessite une bien plus grande quantité d'énergie. A titre d'illustration, l'énergie nécessaire pour envoyer une trame est de l'ordre de 0.5mW à 1mW, alors que la procédure de configuration peut nécessiter une dizaine de mW à plusieurs dizaines de mW, l'émission de plusieurs trames successives étant nécessaire.

L'invention concerne également un procédé de configuration d'un dispositif de commande CMD destiné à émettre un signal de commande a une installation domotique tel que représenté à la figure 4. Le procédé de commande est exécuté par le dispositif de commande CMD et comprend :
- une étape de réception d'un signal incident AORD1 en provenance d'un dispositif d'émission ORD ;
- une étape de conversion ACMD1 du signal incident en courant électrique ;
- une étape de réception d'une instruction de configuration AUSR2 ; et
- une étape de configuration ACMD2 dans laquelle le dispositif de commande CMD émet ACMD3 au moins un message de configuration à un dispositif de réception UCE dans l'installation domotique à l'aide du courant électrique issue de la conversion ACMD1 du signal incident.

Une telle disposition permet de mettre le dispositif de commande dans un mode de configuration uniquement à la demande de l'utilisateur. Une telle disposition prévient les cas de figure dans lesquels le dispositif de commande reçoit un signal incident qui ne lui est pas destiné.

Une telle disposition permet d'utiliser l'énergie du signal incident pour réaliser la configuration du dispositif de commande CMD dans l'installation domotique. En effet, en utilisation nominale, le dispositif de commande CMD ne consomme qu'une faible quantité d'énergie alors que lors de sa configuration, celui-ci a besoin de multiplier les échanges avec unité centrale de l'installation domotique, ce qui nécessite une bien plus grande quantité d'énergie. Cette quantité d'énergie plus importante utilisée est celle du signal incident convertie à l'étape de conversion ACMD1.

Selon un mode de réalisation, un utilisateur réalise une étape d'approche AUSR1 du dispositif d'émission ORD au dispositif de commande CMD permettant ainsi à l'émetteur/récepteur 50 de recevoir un signal plus puissant. Ainsi, le dispositif d'émission ORD se trouve à une distance allant de 2cm à 3cm du dispositif de commande CMD.

Selon un mode de réalisation, le dispositif d'émission ORD reçoit un signal d'acquittement de la part du dispositif de réception UCE lors d'une étape d'acquittement AUCE2. Le signal d'acquittement est une confirmation de la bonne configuration du dispositif de commande CMD. Une telle disposition permet à l'utilisateur d'être informé quand il peut éloigner le dispositif d'émission ORD du dispositif de commande CMD.

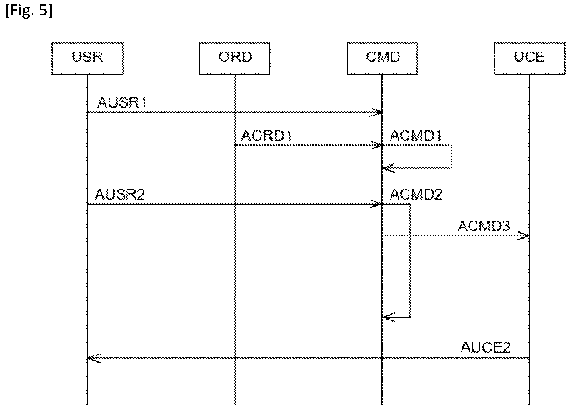

La figure 5 représente un second mode de mise en œuvre de l'invention correspondant notamment à un cas dans lequel le signal incident et le message de configuration sont sur la même fréquence. Les étapes décrites en référence à la figure 4 concernant le premier mode de réalisation sont reprises. Toutefois, l'étape de conversion ACMD1 comprend une étape de stockage de l'énergie dans l'unité de lissage 54. Ainsi l'énergie est stockée sur une période de l'ordre de 20ms à 100ms, pour une intensité allant jusqu'à 20mA et une énergie allant de 40mJoules à plusieurs centaines de mJoules. Une telle disposition permet de stocker assez d'énergie pour pouvoir réaliser l'étape de configuration ACMD2 telle que représenté à la figure 5. Une telle disposition permet donc d'assurer une configuration complète du dispositif de commande, et cela, même dans le cas où l'émetteur récepteur sans fil 50 ne reçoit plus de signal incident. Comme indiqué précédemment en référence à la figure 3, le dispositif passe d'un mode de réception du signal incident destiné à un stockage d'énergie, à la fin de l'étape ACMD1, à un mode d'émission dans lequel le signal de configuration est émis à destination du dispositif de réception lorsque le dispositif dispose de suffisamment d'énergie disponible dans l'unité de lissage d'énergie 54 qui correspond dans ce cas à une unité de stockage d'énergie.

Ainsi, les dispositions selon l'invention permettent, en utilisant une source d'énergie extérieure ne nécessitant pas d'ajouter de matériel de connexion spécifique, de fournir suffisamment d'énergie à un dispositif de commande, comme par exemple un point de commande sans pile et sans fil pour réaliser les appairages avec d'autres appareils selon des protocoles courants (Zigbee, IO Homecontrol) même si les trames utilisées sont souvent longues et sont en plus répétées un grand nombre de fois (3 à 20 voire plus).

Les dispositions selon l'invention permettent d'assurer la bonne configuration du dispositif de commande puisque seuls quelques milliwatts, en d'autres termes plus d'un milliwatt, sont nécessaires pour l'émission de trames de configuration alors qu'un ordiphone émet de l'ordre de 500 mW et jusqu'à 2000 mW.

A titre d'exemple l'invention est particulièrement adaptée pour un point de commande sans pile et sans fil dont le système de génération d'énergie en utilisation nominale n'est capable de fournir qu'une quantité d'énergie limitée mais suffisante pour envoyer une trame d'ordre à un dispositif domotique récepteur. Ce type de générateur d'énergie est par exemple un générateur électrodynamique ou un générateur piézo-électrique. La première gamme de quantité d'énergie disponible pour ce type de générateur est entre 0,5 mW à 1 mW. Ainsi, le dispositif de l'invention est-il ajouté au point de commande pour être en mesure de faciliter la procédure de configuration du point de commande au sein de l'installation domotique. Les deux pourront partager le même circuit radio ainsi que l'antenne. L'unité d'actionnement pourra être une ou plusieurs touches activées simultanément du point de commande pour donner l'ordre d'engager la procédure de configuration au dispositif de l'invention.

Selon un autre exemple, l'invention permet également une utilisation ponctuelle du dispositif de commande sans nécessiter de grande capacité de stockage telle qu'une pile ou une batterie. Une telle disposition est, par exemple, adaptée à un dispositif de commande de protection solaire lorsque ladite protection solaire n'est commandée qu'une semaine par an. En effet, le dispositif de commande CMD ne consomme qu'une très faible quantité d'énergie en fonctionnement nominal. Une unité de lissage d'énergie pourrait alors suffire dans certains cas de figures.

L'ordiphone utilisé pour donner de l'énergie au point de commande sous forme d'ondes radio pourra avantageusement être utilisé avec un logiciel spécifique permettant de faciliter la procédure de configuration. Ainsi, il sera possible, à l'aide de de ce logiciel, de provoquer l'envoi de trames successives qui seront utilisées par le point de commande pour les convertir en énergie. Il sera possible d'avoir une communication entre ce dispositif de réception UCE et l'ordiphone ORD de sorte à témoigner du bon déroulement de la procédure de configuration et d'en signifier la fin afin d'arrêter l'émission de trames successives devenues inutile. L'autonomie énergétique de l'ordiphone s'en trouve de ce fait peu impactée.

Selon un mode de réalisation, le signal incident comprend une pluralité de trames. Une telle configuration permet au convertisseur 56 de convertir une plus grande quantité d'énergie et ainsi d'alimenter l'unité logique de traitement 52 suffisamment pour de réaliser l'étape de configuration ACMD3.

Selon un mode de réalisation, l'étape de réception d'un signal incident AORD1, est répétée au cours du procédé, par exemple après l'étape de réception d'une instruction de configuration AUSR2. Une telle disposition permet d'obtenir l'énergie nécessaire à la réalisation des différentes étapes du procédé sans nécessiter de grandes capacités de stockage.

Selon un exemple particulier, le procédé comprend :
- une étape de réception d'un signal incident AORD1, comprenant quatre trames, en provenance d'un dispositif d'émission ORD.
- une étape de conversion ACMD1 du signal incident, comprenant quatre trames, en courant électrique, une telle disposition permet d'obtenir l'énergie nécessaire à la réalisation des différentes étapes du procédé ;
- une étape de réception d'une instruction de configuration AUSR2 ;
- une étape de configuration ACMD2 dans laquelle le dispositif de commande CMD émet ACMD3 au moins un message de configuration à un dispositif de réception UCE dans l'installation domotique à l'aide du courant électrique issue de la conversion ACMD1 du signal incident comprenant quatre trames ;
- une étape de réception d'un signal incident comprenant une instruction de commande, en provenance du dispositif d'émission ORD ;
- une étape de conversion du signal incident comprenant une instruction de commande en courant électrique ;
- une étape de démodulation du signal incident comprenant une instruction de commande ;
- une étape de commande, dans laquelle le dispositif de commande CMD émet au moins un message de commande au dispositif de réception UCE à l'aide du courant issue de la conversion du signal incident comprenant une instruction de commande.

L'étape de commande étant réalisée sur la base de l'instruction de commande démodulée.

Selon un mode de réalisation, l'instruction de configuration reçue à l'étape de réception d'une instruction de configuration AUSR2 comprend une ou plusieurs des informations suivantes :
- un motif de synchronisation permettant de synchroniser le dispositif de commande CMD avec le dispositif d'émission ORD ;
- un en-tête comprenant un identifiant de version protocolaire permettant au dispositif d'émission de désigner au dispositif de commande le protocole de transmission utilisé ;
- des données telle qu'une adresse réseau correspondant au dispositif de réception UCE par exemple ; et/ou
- une somme de contrôle permettant de contrôler la bonne transmission des données.

Selon un mode de réalisation le signal incident et l'instruction de configuration sont transmises selon le protocole Bluetooth, et plus spécifiquement, le « Bluetooth Advertising ».

Selon un mode de réalisation, l'instruction de configuration est en provenance du dispositif d'émission ORD.

## Revendications

1. Dispositif de commande (CMD) destiné à émettre un signal de commande à destination d'une unité centrale d'une installation domotique, le dispositif de commande (CMD) comprenant :
- un émetteur/récepteur sans fil (50) configuré pour recevoir un signal incident en provenance d'un dispositif d'émission (ORD) ;
- une unité d'actionnement configurée pour recevoir une instruction de configuration ;
- une unité logique de traitement (52) adaptée pour décider de l'émission du signal de commande par l'émetteur/récepteur sans fil (50), et configurée pour :
- recevoir une instruction de configuration en provenance de l'unité d'actionnement ; et
- générer au moins un message de configuration à émettre à destination de l'unité centrale de l'installation domotique, l'au moins un message de configuration comprenant un message d'appairage ; l'émetteur/récepteur sans fil (50) étant également configuré pour émettre l'au moins un message de configuration à destination de l'unité centrale de l'installation domotique ;
- un convertisseur (56) configuré pour convertir le signal incident en courant électrique et pour alimenter l'unité logique de traitement (52) à l'aide dudit courant électrique.
le dispositif de commande (CMD) étant configuré pour recevoir et convertir le signal incident lorsque l'unité logique de traitement (52) est hors tension, et pour émettre l'au moins un message de configuration à destination de l'unité centrale de l'installation domotique à l'aide du courant électrique issu de la conversion du signal incident.

2. Dispositif de commande (CDM) selon la revendication 1, tel que le dispositif comprend une unité de lissage d'énergie (54) configurée pour lisser le courant issu de la conversion du signal incident.

3. Dispositif de commande (CMD) selon la revendication 2, tel que l'unité de lissage d'énergie (54) est un condensateur.

4. Dispositif de commande (CMD) selon l'une quelconque des revendications 1 à 3, tel que le dispositif d'émission (ORD) depuis lequel est émis le signal incident est un ordiphone.

5. Dispositif de commande (CMD) selon l'une quelconque des revendications 1 à 4, tel que le signal incident en provenance d'un dispositif d'émission (ORD) et le signal de configuration envoyé à l'unité centrale de l'installation domotique sont de fréquences différentes.

6. Dispositif de commande (CMD) selon l'une quelconque des revendications 1 à 5, tel que le signal incident en provenance d'un dispositif d'émission (ORD) et le signal de configuration envoyé à l'unité centrale de l'installation domotique sont de mêmes fréquences.

7. Dispositif de commande (CMD) selon l'une quelconque des revendications 1 à 6, dans lequel le convertisseur (56) est configuré pour générer un signal binaire à destination de l'unité logique de traitement (52).

8. Dispositif de commande (CMD) selon la revendication 7, dans lequel la valeur du signal binaire généré dépend de l'état de réception du signal incident.

9. Procédé de configuration d'un dispositif de commande (CMD) selon l'une des revendications 1 à 8, dans lequel le procédé de commande est exécuté par le dispositif de commande (CMD) et comprend:
- une étape de réception d'un signal incident (AORD1) en provenance d'un dispositif d'émission (ORD) ;
- une étape de conversion (ACMD1) du signal incident en courant électrique, l'étape de réception et l'étape de conversion étant mises en œuvre lorsque l'unité logique de traitement (52) est hors tension ;
- une étape de réception d'une instruction de configuration (AUSR2) ;
- une étape de configuration (ACMD2) dans laquelle le dispositif de commande (CMD) émet (ACMD3) au moins un message de configuration à destination de l'unité centrale de l'installation domotique à l'aide du courant électrique issue de la conversion (ACMD1) du signal incident, l'au moins un message de configuration comprenant un message d'appairage.

10. Procédé de configuration selon la revendication 9, dans lequel l'instruction de configuration reçue à l'étape de réception d'une instruction de configuration (AUSR2) comprend une ou plusieurs des informations suivantes :
• un motif de synchronisation permettant de synchroniser le dispositif de commande (CMD) avec le dispositif d'émission (ORD) ;
• un en-tête comprenant un identifiant de version protocolaire permettant au dispositif d'émission de désigner au dispositif de commande le protocole de transmission utilisé ;
• des données telle qu'une adresse réseau correspondant à l'unité centrale de l'installation domotique par exemple ; et/ou
• une somme de contrôle permettant de contrôler la bonne transmission des données.

11. Procédé selon l'une quelconque des revendications 9 ou 10, dans lequel l'instruction de configuration est en provenance du dispositif d'émission (ORD).

## Patentansprüche

1. Steuervorrichtung (CMD), die zum Senden eines Steuersignals an eine Zentraleinheit einer Hausautomatisierungsanlage bestimmt ist, wobei die Steuervorrichtung (CMD) Folgendes umfasst:
- einen drahtlosen Sender/Empfänger (50), der zum Empfangen eines Störsignals von einer Sendevorrichtung (ORD) konfiguriert ist;
- eine Betätigungseinheit, die zum Empfangen einer Konfigurationsanweisung konfiguriert ist;
- eine logische Verarbeitungseinheit (52), die geeignet ist, um zu entscheiden, ob das Steuersignal von dem drahtlosen Sender/Empfänger (50) gesendet wird, und zu Folgendem konfiguriert ist:
- Empfangen einer Konfigurationsanweisung von der Betätigungseinheit; und
- Erzeugen mindestens einer Konfigurationsnachricht, die an die Zentraleinheit der Hausautomatisierungsanlage gesendet werden soll, wobei die mindestens eine Konfigurationsnachricht eine Kopplungsnachricht umfasst; wobei der drahtlose Sender/Empfänger (50) auch zum Senden von mindestens einer Konfigurationsnachricht an die Zentraleinheit der Hausautomatisierungsanlage konfiguriert ist;
- mindestens einen Wandler (56), der zum Umwandeln des Störsignals in elektrischen Strom und zum Aufladen der logischen Verarbeitungseinheit (52) mithilfe des elektrischen Stroms konfiguriert ist.
wobei die Steuervorrichtung (CMD) zum Empfangen und Umwandeln des Störsignals konfiguriert ist, wenn die logische Verarbeitungseinheit (52) ausgeschaltet ist, und zum Senden der mindestens einen Konfigurationsnachricht an die Zentraleinheit der Hausautomatisierungsanlage mithilfe des elektrischen Stroms aus der Umwandlung des Störsignals.

2. Steuervorrichtung (CDM) nach Anspruch 1, wobei die Vorrichtung eine Energieglättungseinheit (54) umfasst, die zum Glätten des Stroms aus der Umwandlung des Störsignals konfiguriert ist.

3. Steuervorrichtung (CMD) nach Anspruch 2, wobei die Energieglättungseinheit (54) ein Kondensator ist.

4. Steuervorrichtung (CMD) nach einem der Ansprüche 1 bis 3, wobei die Sendevorrichtung (ORD), von der das Störsignal ausgesendet wird, ein Smartphone ist.

5. Steuervorrichtung (CMD) nach einem der Ansprüche 1 bis 4, wobei das von einer Sendeeinrichtung (ORD) stammende Störsignal und das an die Zentraleinheit der Hausautomatisierungsanlage gesendete Konfigurationssignal unterschiedliche Frequenzen sind.

6. Steuervorrichtung (CMD) nach einem der Ansprüche 1 bis 5, wobei das von einer Sendevorrichtung (ORD) stammende Störsignal und das an die Zentraleinheit der Hausautomatisierungsanlage gesendete Konfigurationssignal gleiche Frequenzen sind.

7. Steuervorrichtung (CMD) nach einem der Ansprüche 1 bis 6, wobei der Wandler (56) so konfiguriert ist, dass er ein Binärsignal für die logische Verarbeitungseinheit (52) erzeugt.

8. Steuervorrichtung (CMD) nach Anspruch 7, wobei der Wert des erzeugten Bitsignals von dem Empfangszustand des Störsignals abhängt.

9. Verfahren zum Konfigurieren einer Steuervorrichtung (CMD) nach einem der Ansprüche 1 bis 8, wobei das Steuerverfahren von der Steuervorrichtung (CMD) ausgeführt wird und Folgendes umfasst:
- einen Schritt des Empfangens eines Störsignals (AORD1) von einer Sendevorrichtung (ORD);
- einen Schritt des Umwandelns (ACMD1) des Störsignals in elektrischen Strom, wobei der Empfangsschritt und der Umwandlungsschritt ausgeführt werden, wenn die logische Verarbeitungseinheit (52) nicht unter Spannung steht;
- einen Schritt des Empfangens einer Konfigurationsanweisung (AUSR2);
- einen Schritt des Konfigurierens (ACMD2), bei dem die Steuervorrichtung (CMD) mithilfe des aus der Umwandlung (ACMD1) des Störsignals resultierenden elektrischen Stroms mindestens eine Konfigurationsnachricht (ACMD3) an die Zentraleinheit der Hausautomatisierungsanlage sendet, wobei die mindestens eine Konfigurationsnachricht eine Kopplungsnachricht umfasst.

10. Konfigurationsverfahren nach Anspruch 9, wobei die in dem Empfangsschritt einer Konfigurationsanweisung (AUSR2) empfangene Konfigurationsanweisung eine oder mehrere der folgenden Informationen umfasst:
• ein Synchronisierungsmuster, das es ermöglicht, die Steuervorrichtung (CMD) mit der Sendevorrichtung (ORD) zu synchronisieren;
• eine Kopfzeile, die eine Protokollversionskennung umfasst, die es der Sendevorrichtung ermöglicht, der Steuervorrichtung das verwendete Übertragungsprotokoll zuzuweisen;
• Daten wie eine Netzwerkadresse, die der Zentraleinheit der Hausautomatisierungsanlage entspricht; und/oder
• eine Prüfsumme zum Überprüfen der korrekten Datenübertragung.

11. Verfahren nach einem der Ansprüche 9 oder 10, wobei die Konfigurationsanweisung von der Sendevorrichtung (ORD) stammt.

## Claims

1. A control device (CMD) intended to transmit a control signal to a central unit of a home automation installation, the control device (CMD) comprising:
- a wireless transmitter/receiver (50) configured to receive an incident signal originating from a transmitting device (ORD);
- an actuating unit configured to receive a configuration instruction;
- a logic processing unit (52) adapted to decide on the transmission of the control signal by the wireless transmitter/receiver (50), and configured to:
- receive a configuration instruction originating from the actuating unit; and
- generate at least one configuration message to be transmitted to the central unit of the home automation installation, said at least one configuration message comprising a pairing message; the wireless transmitter/receiver (50) being further configured to transmit at least one configuration message to the central unit of the home automation installation;
- a converter (56) configured to convert the incident signal into an electrical current and to supply the logic processing unit (52) using said electrical current.
The control device (CMD) being configured to receive and convert the incident signal when the logic processing unit (52) is unpowered, and to transmit the at least one configuration message to the central unit of the home automation installation using the electrical current resulting from the conversion of the incident signal.

2. The control device (CDM) according to claim 1, wherein the device comprises an energy smoothing unit (54) configured to smooth the current resulting from the conversion of the incident signal.

3. The control device (CMD) according to claim 2, wherein the energy smoothing unit (54) is a capacitor.

4. The control device (CMD) according to any one of claims 1 to 3, wherein the transmitting device (ORD) from which the incident signal is emitted is a smartphone.

5. The control device (CMD) according to any one of claims 1 to 4, wherein the incident signal originating from a transmitting device (ORD) and the configuration signal sent to the central unit of the home automation installation have different frequencies.

6. The control device (CMD) according to any one of claims 1 to 5, wherein the incident signal originating from a transmitting device (ORD) and the configuration signal sent to the central unit of the home automation installation have the same frequency.

7. The control device (CMD) according to any one of claims 1 to 6, wherein the converter (56) is configured to generate a binary signal intended for the logic processing unit (52).

8. The control device (CMD) according to claim 7, wherein the value of the generated binary signal depends on the reception state of the incident signal.

9. A method for configuring a control device (CMD) according to any one of claims 1 to 8, wherein the control method is executed by the control device (CMD) and comprises:
- a step of receiving an incident signal (AORD1) originating from a transmitting device (ORD);
- a step of converting (ACMD1) the incident signal into an electrical current, the reception step and the conversion step being implemented when the logic processing unit (52) is unpowered;
- a step of receiving a configuration instruction (AUSR2);
- a configuration step (ACMD2) in which the control device (CMD) transmits (ACMD3) at least one configuration message to the central unit of the home automation installation using the electrical current resulting from the conversion (ACMD1) of the incident signal, said at least one configuration message comprising a pairing message.

10. The configuration method according to claim 9, wherein the configuration instruction received during the step of receiving a configuration instruction (AUSR2) comprises one or more of the following pieces of information:
• a synchronization pattern enabling the control device (CMD) to be synchronized with the transmitting device (ORD);
• a header comprising a protocol version identifier enabling the transmitting device to indicate to the control device the transmission protocol used;
• data such as a network address corresponding, for example, to the central unit of the home automation installation; and/or
• a checksum for verifying the correct transmission of the data.

11. The method according to any one of claims 9 or 10, wherein the configuration instruction originates from the transmitting device (ORD).
